# EUROPEAN PATENT SPECIFICATION

(11) **EP 3 421 726 B1**
(45) Date of publication and mention of the grant of the patent: **30.12.2020**
(21) Application number: 17179192.4
(22) Date of filing: 30.06.2017
(51) Int. Cl.: F01D 9/02, F01D 25/12, F23R 3/60, F01D 11/00

(54) **PICTURE FRAME FOR CONNECTING A CAN COMBUSTOR TO A TURBINE IN A GAS TURBINE AND GAS TURBINE COMPRISING A PICTURE FRAME**
BILDERRAHMEN ZUR VERBINDUNG EINES ROHRBRENNERS MIT EINER GASTURBINE UND GASTURBINE MIT EINEM BILDERRAHMEN
CADRE D'IMAGE DE CONNEXION D'UNE CHAMBRE DE COMBUSTION À UNE TURBINE DANS UNE TURBINE À GAZ ET TURBINE À GAZ COMPRENANT UN CADRE D'IMAGE

(43) Date of publication of application: 02.01.2019
(73) Proprietor: Ansaldo Energia Switzerland AG, 5401 Baden (CH)
(72) Inventor: MAURER, Michael Thomas, 79713 BAD SÄCKINGEN (DE); BAUMGARTNER, Felix Andreas, 79761 WALDSHUT-TIENGEN (DE); RUBEKIN, Evgeny Vladimirovich, 129226 MOSCOW (RU)
(74) Representative: Martini, Gabriele

(56) References cited:
- US-A1- 2004 139 746
- US-A1- 2013 042 631
- US-A1- 2016 076 454
- US-A1- 2016 281 522

## Description

### Field of the Invention

The present invention relates to a gas turbine for power plants comprising a plurality of can combustors. In particular, the present invention relates to the downstream portion of each can combustor, wherein such downstream portion is called in gas turbine technical field as "picture frame" and is configured for connecting the can combustor to the turbine.

### Description of prior art

As known, a gas turbine for power plants (in the following only gas turbine) comprises a rotor defining an axis and is provided with an upstream compressor sector, a combustor sector and a downstream turbine sector. The terms downstream and upstream refer to the direction of the gas flow passing through the gas turbine. In particular, the compressor comprises an inlet supplied with ambient air and a plurality of blades compressing the air. The compressed air leaving the compressor flows into a plenum and from there into the combustor. Inside the combustor the compressed air is mixed with at least one fuel. Such mixture of fuel and compressed air flows into a combustion chamber where is combusted. The resulting hot gas leaves the combustor and expands in the turbine performing work on the rotor.

The combustor sector can be realized in form of a plurality of can-combustors arranged annularly around the turbine axis as a ring and supported by an outer casing delimiting the plenum. In particular, this outer casing comprises a plurality of portal holes for supporting the combustor cans that are arranged in part outside and in part inside outer casing.

Each can-combustor is provided with a transition piece arranged downstream the combustion chamber for directing the hot gas toward the turbine, in particular toward the first vane of the turbine. The downstream part of the can-combustor, i.e. the downstream part of the transition piece, comprises a frame in form a square flange, called "picture frame", configured for coupling the combustor with the turbine in a sealed manner. In particular, the picture frame comprises an outer and an inner annular portion and two lateral radial portions, wherein the outer annular portion is coupled with the outer platform of the first vane. Preferably, the picture frame is fixed to the turbine only at the outer diameter via bolts and the above coupling with the platform of the first vane is realized in a sealed manner by using honeycomb seals configured to receive teeth provided in vane platforms.

Since the picture frame is part of the can combustor, this portion is in contact with the hot gas and therefore needs to be cooled. The cooling medium used for cooling the picture frame is a portion of the compressed air present inside the plenum. According the prior art practice, the cooling air flows through long cooling holes passing the picture frame before being discharged in the hot gas flow. This portion of the compressed air used for cooling functions does not participate in the combustion.

This prior art practice involves some drawbacks. Indeed the steps of realizing the above long cooling holes inside the picture frame require high manufacturing costs. Moreover, the fact that part of the compressed air does not participate in the combustion affects in a negative manner the emission of the gas turbine.

US2016076454 discloses a picture frame for a gas turbine according to the preamble of claim 1. US2016281522 and US2013042631 disclose gas turbines having picture frames for connecting the combustor sectors to the turbines.

### Disclosure of the invention

A primary object of the present invention is to provide a new and inventive picture frame for connecting a can combustor to a turbine in a gas turbine for power plants, wherein such picture frame is able to overcome the drawbacks of the prior art.

In order to achieve the objective mentioned above, the present invention provides a gas turbine having an axis and comprising:
- a compressor for compressing ambient air,
- a plenum for receiving compressed air leaving the compressor,
- a plurality of can combustors for mixing and combusting the compressed air leaving the plenum with at least a fuel,
- a turbine for expanding the combusted hot gas leaving the can combustors and for performing work on a rotor;
- a frame, known as "picture frame", for connecting each can combustor to the turbine.
The elements listed above are well known by a skill person in the field of the gas turbines and therefore additional specifications are not needed.

According to the main aspect of the invention, each picture frame comprises:
- a seat in form a recess obtained in a portion of the picture frame facing the turbine, in particular the portion of the picture frame configured to be coupled with the vane platforms of the turbine;
- an insert housed in the seat and having a downstream or front portion configured to be coupled with the turbine, in particular with the above mentioned vane platforms of the turbine;
- a first and a second collector (i.e. two collecting hollow volumes) for collecting cooling air, such first and a second collector being realized at the interface between the seat and the insert; in particular the seat and the insert are shaped so that when the insert is inserted inside the seat between such two elements remain two separated hollow volumes suitable for collecting cooling air;

- an inlet hole connecting the first collector to the plenum for feeding the first collector with cooling air, in particular such inlet hole is obtained in an outer portion of the picture frame;
- at least a transfer duct connecting the first to the second collector for transferring the cooling air from the first to the second collector, in particular the first collector is outwardly placed with respect to the second collector and the transfer duct may comprise at least a radial portion and an axial portion; in particular such transfer duct is realized either inside the insert or by is defined by cooperating portions of the seat and the insert. In other words, the transfer duct connecting the first and the second collector is not obtained as channels passing inside the frame of the picture frame.

Advantageously, according to the invention the cooling circuit for cooling the picture frame is not realized by high expensive manufacturing steps in a relative big component as the frame of the picture frame but are created in a small component, i.e. the insert, that allow to reduce the costs and to enable retrofitability. Moreover, this inventive solution increases the reliability of the picture frame cooling and, consequently, the lifetime of this component.

According to an embodiment of the invention, the picture frame comprises an outlet hole connecting the second collector to the hot gas flow for discharging the cooling air from second collector in the hot gas flow entering the turbine. In particular, this outlet hole discharges the cooling air into a cavity between the picture frame and the first vane.

Advantageously, this embodiment allows to mitigate the potential hot gas ingestion into the above mentioned cavity.

According to an embodiment of the invention, i.e. an alternative or complementary embodiment with respect to the previous one, the picture frame comprises a return hole configured to realize a closed loop for the cooling air without any discharge into the hot gas flow.

Advantageously, this embodiment allows to reduce the consumption of the cooling air bypassing the combustion.

Preferably, according to the last embodiment, the combustor comprises a liner arranged upstream the picture frame, wherein such liner comprises a hot shell in contact with the hot gas and a cool shell arranged inside the plenum and forming with the hot shell a liner cooling passage. In this configuration, the discharge end of the return hole is facing the entry gate of such liner cooling passage.

Advantageously, in this embodiment the pressure gradient at the inlet of the liner cooling passage allows to accelerate or to drive the cooling air exiting the return hole.

Preferably, the insert comprises a holding piece C-shaped housed in the seat and an honeycomb seal housed in the holding piece and configured to the coupled with a vane tooth of a vane platform supporting a vane.

According to this embodiment, the transfer duct can be realized in at least three different ways. In particular, the transfer duct can be realized in form of through holes passing inside the holding piece, in form of grooves realized by the cooperating surface of the holding piece and the seat or in form of a gap realized between the holding piece and the seat.

The invention has been foregoing defined as a gas turbine comprises the inventive picture frame. However, the present invention relates moreover to the single picture frame and/or to the single insert. Indeed, these elements can be integrated in current gas turbines in order to reach to the claimed solution in a very easy and cheap manner.

It is to be understood that both the foregoing general description and the following detailed description are exemplary, and are intended to provide further explanation of the invention as claimed. Other advantages and features of the invention will be apparent from the following description, drawings and claims.

The features of the invention believed to be novel and inventive are set forth with particularity in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- Fig. 1 is a schematic view of an example of a gas turbine for power plants;
- Fig. 2 is a schematic view of the downstream portion of a can combustor having a picture frame for connecting the can combustor to the turbine;
- Fig. 3 is a schematic sectional view of a portion of a first embodiment of a picture frame according to the invention;
- Fig. 4 is a schematic sectional view of a portion of a second embodiment of a picture frame according to the invention;
- Fig. 5 is a schematic disassembled view of a portion of a picture frame according to the invention.

### Detailed description of preferred embodiments of the invention

In cooperation with attached drawings, the technical contents and detailed description of the present invention are described thereinafter according to preferred embodiments, being not used to limit its executing scope. The present invention encompasses any equivalent variation and modification covered by the appended claims.

Reference will be made to the drawing figures to describe the present invention in detail.

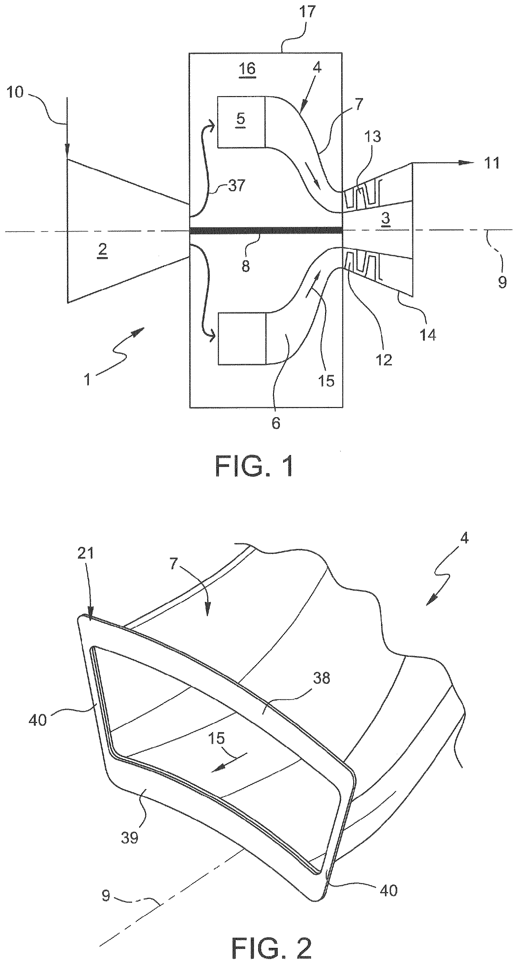

Reference is now made to Fig. 1, which is a schematic view of an example of a gas turbine for power plants. In particular, figure 1 discloses a gas turbine 1 having an axis 9 and comprising a compressor 2, a combustor sector 4 and a turbine 3. As known, ambient air 10 enters the compressor 2 and compressed air leaves the compressor 2 and enters in a plenum 16, i.e. a volume define by an outer casing 17. From the plenum 16, the compressed air 37 enters in the combustor that comprises a plurality of can combustors 4 annularly arranged around the axis 9. The terms annular, radial, axial, inner and outer refer to the axis 9 whereas the terms downstream and upstream refer to the gas main flow. Each can combustor 4 comprises a burner 5 where the compressed air 37 is mixed with at least a fuel. This mixture is then combusted in a combustion chamber 6 and the resulting hot gas flows in a transition piece 7 downstream connected to the turbine 3. The turbine 3 comprises a plurality of vanes 12, i.e. stator blades, supported by a vane carrier 14, and a plurality of blades 13, i.e. rotor blades, supported by a rotor 8. In the turbine 3, the hot gas expands performing work on the rotor 8 and leaves the turbine 3 in form of exhaust gas 11.

Reference is now made to Fig. 2 that is a schematic view of the downstream portion of a can combustor having a picture frame for connecting the can combustor to the turbine. As foregoing described about the can combustor 4, a transition piece 7 is provided for guiding the hot gas 15 toward the turbine 3. Such transition piece 7 has to be coupled in a sealed manner to the turbine 3 and therefore comprises a particular downstream portion provided with a square flange 21, called picture frame. Fig. 2 is a schematic view of such picture frame 21 arranged downstream the combustor and comprised an outer annular wall 38, an inner annular wall 39 and two lateral radial walls 40. At least the outer annular wall 38 is configured to be coupled in a sealed manner with a relative outer platform supporting a vane, i.e. the first vane. The two lateral radial walls 40 are configured to be coupled in a sealed manner with lateral radial walls 40 of adjacent can combustors 4.

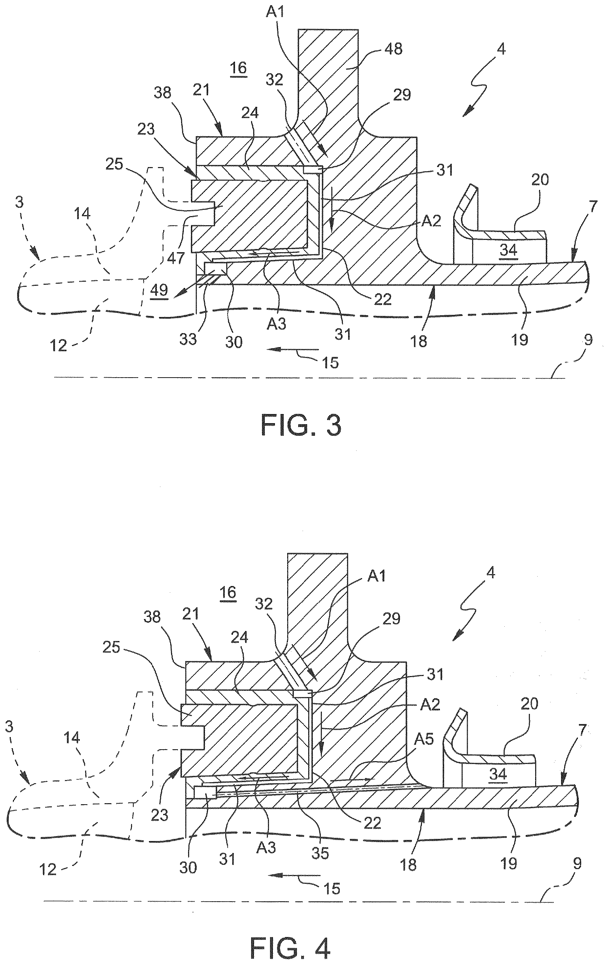

Reference is now made to Fig. 3 that is a schematic sectional view of a portion of a first embodiment of a picture frame according to the invention. In particular, the figure 3 discloses the section of the outer annular wall 38 of the picture frame 21 coupled with a vane platform 14 supporting a vane 12. As discloses in figure 3, the outer annular wall 38 of the picture frame 21 comprises a frame 48 provided with a seat 22 facing the vane platform 14. Such seat 22 is realized in form a C-shaped annular recess. Inside the seat 22 an insert 23 in inserted. Such insert 23 comprises a holding piece 24 C-shaped and configured to be inserted in a fit manner in the seat 22. Inside the holding piece 24 an honeycomb seal 26 is housed and such honeycomb seal 26 comprises a seat 27 configured for receiving a tooth 47 of the vane platform 14. The seat 22 and the holding piece 23 are shaped and configured so that when the holding piece 23 is inserted into the seat 22 two separated air collector 29 30 are generated by the relative cooperating surfaces. According to the fig. 3, the first collector 29 is obtained at the outer upstream edge of the insert 23 whereas the second collector 30 is obtained at the inner downstream edge of the seat 22. The frame 48 comprises an inlet hole 32 connecting the plenum 16 to the first collector 29 for allowing the cooling air to reach the first collector 29 from the plenum 16. The insert 23 and the seat 22 are configured so that only through the inlet hole 32 the cooling air can reach the first collector 29. The arrow A1 in figure 3 represents the flow of the cooling air from the plenum 16 to the first collector 29. Between the holding piece 23 and the seat 22, in particular between the upstream and the inner surface of the holding piece 23 is and the seat 22, a distance is present that forms a transfer duct 31 allowing the cooling air to reach the second collector 30 from the first collector 29. The insert 23 and the seat 22 are configured so that only through the transfer duct 31 the cooling air can reach the second collector 30. The arrows A2 and A3 in figure 3 represent the flow of the cooling air from the first collector 29 to the second collector 30. The frame 48 of the picture frame 21 comprises an outlet hole 33 connecting the second collector 30 to a cavity 49 between the picture frame 21 and the vane 12. The arrows A4 in figure 3 represents the flow of the cooling air from the second collector 30 to such cavity 49. Upstream the picture frame 21, the transition piece 7 of the combustor 4 comprises a liner 19 provided with a hot shell 19 facing the hot gas 15 and a cool shell 20 inside the plenum 16. Such hot shell 19 and cool shell 20 form a liner cooling channel 34.

Reference is now made to Fig. 4, which is a schematic sectional view of a portion of a second embodiment of a picture frame according to the invention. The embodiment disclosed in fig. 4 does not comprise the outlet hole 33 foregoing described but is provided with a return hole or channel 35 connecting the second collector 30 to the plenum 16. The arrows A5 in figure 4 represents the flow of the cooling air from the second collector 30 to the plenum 16. In particular, the discharge end of such return hole or channel 35 is facing the entry gate of the liner cooling channel 34.

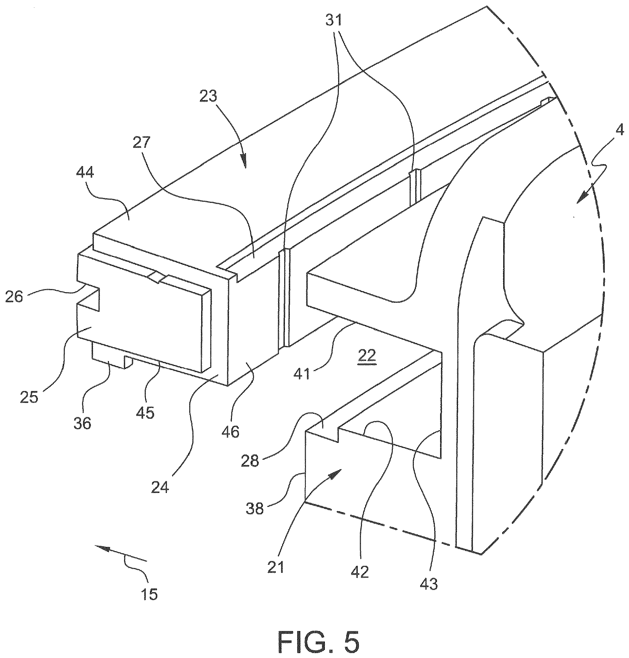

Reference is now made to Fig. 5 that is a schematic disassembled view of a portion of a picture frame according to the invention. This figure 5 shows an example about how can be obtained the collectors 29 30 and the transfer duct 31. According to Fig. 5, the first collectors 29 extends annularly along the entire outer upstream edge of the outer surface 44 of the insert 21 and is limited on the insert side by a common annular grove 27 and on the seat side by straight outer and radial wall 41, 43. As disclosed in fig. 5, the transfer duct 31 is realized in form of a plurality grooves realized in the upstream surface 46 and in the inner surface 45 of the insert 21. Once the insert 21 is inserted in the seat, these grooves 31 are completed by the radial 43 and inner surface 42 of the seat 21. According to fig. 5, the second collector 30 extends annularly along the entire inner downstream edge of the inner surface 42 of the seat 22 and is limited on the seat side by a common annular grove 28 and on the insert side by an annular step 36 at the inner downstream edge of the inner surface 45.

Although the invention has been explained in relation to its preferred embodiment(s) as mentioned above, it is to be understood that many other possible modifications and variations can be made without departing from the scope of the present invention as defined by the appended claims.

## Claims

1. Picture frame for connecting a can combustor to a turbine in a gas turbine, the picture frame (21) comprising:
- a seat (22) in form a recess facing the turbine (3);
- an insert (23) housed in the seat (22) and configured to be coupled with the turbine (3);
**characterized in that** the picture frame moreover comprises:
- a first (29) and a second collector (30) for cooling air between the seat (22) and the insert (23);
- an inlet hole (32) for feeding the first collector (29) with cooling air from outside the can combustor (4);
- at least a transfer duct (31) connecting the first (29) to the second collector (30).

2. Picture frame as claimed in claim 1, wherein the picture frame (21) comprises an outlet hole (33) for discharging the cooling air from the second collector (30) in the hot gas flow (15) entering the turbine (4).

3. Picture frame as claimed in claim 2 or 1, wherein the picture frame (21) comprises a return hole (25) connecting the second collector (30); the return hole (25) being configured for realizing a closed loop for the cooling air without any discharge into the hot gas flow.

4. Picture frame as claimed in any one of the foregoing claims, wherein the insert (23) comprises an holding piece (24) C-shaped housed in the seat (22) and an honeycomb seal (25) housed in the holding piece (24) and configured to be coupled with the turbine (4).

5. Picture frame as claimed in claim 4, wherein the transfer duct (31) is realized in form of through holes passing inside the holding piece (24).

6. Picture frame as claimed in claim 4, wherein the transfer duct (31) is realized in form of grooves realized between the holding piece (24) and the seat (22).

7. Picture frame as claimed in claim 4, wherein the transfer duct (31) is realized in form of a gap realized between the holding piece (24) and the seat (22).

8. A gas turbine for power plants, the gas turbine (1) having an axis (9) and comprising:
- a compressor (2) for compressing ambient air,
- a plenum (16) for receiving compressed air leaving the compressor (2),
- a plurality of can combustors (4) for mixing and combusting the compressed air leaving the plenum (16) with at least a fuel,
- a turbine (3) for expanding the combusted hot gas flow (15) leaving the can combustors (4) and performing work on a rotor (8);
wherein each can combustor (4) comprises a picture frame (21) for connecting the can combustor (4) to the turbine (3); each picture frame (21) being realized according to any one of the foregoing claims and the transfer duct being realized either inside the insert (23) or by being defined by matching portions of the seat (22) and the insert (23).

## Patentansprüche

1. Bilderrahmen zur Verbindung einer Rohrbrennkammer mit einer Turbine in einer Gasturbine, welcher Bilderrahmen (21) enthält:
- einen Sitz (22) in Form einer zu der Turbine (3) weisenden Vertiefung;
- einen in dem Sitz (22) untergebrachten Einsatz (23), der zur Verbindung mit der Turbine (3) konfiguriert ist;
**dadurch gekennzeichnet, dass** der Bilderrahmen ferner enthält:
- einen ersten (29) und einen zweiten Sammler (30) für Kühlluft zwischen dem Sitz (22) und dem Einsatz (23);
- eine Einlassöffnung (32) zur Versorgung des ersten Sammlers (29) mit Kühlluft von außerhalb der Rohrbrennkammer (4);
- mindestens eine Übertragungsleitung (31), die den ersten (29) mit dem zweiten Sammler (30) verbindet.

2. Bilderrahmen nach Anspruch 1, wobei der Bilderrahmen (21) eine Auslaßöffnung (33) zum Ausstossen der Kühlluft von dem zweiten Sammler (30) in den in die Turbine (4) eintretenden Heißgasstrom (15) aufweist.

3. Bilderrahmen nach Anspruch 2 oder 1, wobei der Bilderrahmen (21) eine mit dem zweiten Sammler (30) verbundene Rückführungsöffnung (25) aufweist, wobei die Rückführungsöffnung (25) dafür konfiguriert ist, einen geschlossenen Kreislauf für die Kühlluft ohne jeglichen Austritt in den Heißgasstrom zu verwirklichen.

4. Bilderrahmen nach einem der vorhergehenden Ansprüche, wobei der Einsatz (23) ein C-förmiges Halteteil (24) aufweist, das in dem Sitz (22) untergebracht ist, und eine Wabendichtung (25), die in dem Halteteil (24) untergebracht ist und dafür konfiguriert ist, mit der Turbine (4) gekoppelt zu werden.

5. Bilderrahmen nach Anspruch 4, wobei die Übertragungsleitung (31) in Form von innerhalb des Halteteils (24) verlaufenden Durchgangsöffnungen verwirklicht ist.

6. Bilderrahmen nach Anspruch 4, wobei die Übertragungsleitung (31) in Form von Nuten verwirklicht ist, die zwischen dem Halteteil (24) und dem Sitz (22) verwirklicht sind.

7. Bilderrahmen nach Anspruch 4, wobei die Übertragungsleitung (31) in Form eines Spalts verwirklicht ist, der zwischen dem Halteteil (24) und dem Sitz (22) verwirklicht ist.

8. Gasturbine für Kraftwerke, welche Gasturbine (1) eine Achse hat und enthält:
- einen Verdichter (2) zum Verdichten von Umgebungsluft;
- einen Raum (16) zum Aufnehmen der aus dem Verdichter (2) austretenden verdichteten Luft;
- eine Vielzahl von Rohrbrennkammern (4) zum Mischen und Verbrennen der aus dem Raum (16) austretenden verdichteten Luft mit mindestens einem Brennstoff;
- eine Turbine (3) zum Expandieren des aus den Rohrbrennkammern (4) austretenden verbrannten Heißgasstroms (15) und Leisten von Arbeit an einem Rotor (8) ;
wobei jede Rohrbrennkammer (4) einen Bilderrahmen (21) zum Verbinden der Rohrbrennkammer (4) mit der Turbine (3) aufweist; wobei jeder Bilderrahmen (21) gemäß einem der vorhergehenden Ansprüche verwirklicht ist und die Übertragungsleitung entweder innerhalb des Einsatzes (23) verwirklicht ist oder durch zusammenpassende Teile des Sitzes (22) und des Einsatzes (23) gebildet ist.

## Revendications

1. Cadre destiné à relier une chambre de combustion tubulaire à une turbine dans une turbine à gaz, le cadre (21) comprenant :
- un siège (22) sous forme de renfoncement tourné vers la turbine (3) ;
- un insert (23) contenu dans le siège (22) et configuré pour être couplé à la turbine (3) ;
**caractérisé en ce que** le cadre comprend en outre :
- un premier (29) et un second (30) collecteurs destinés à refroidir l'air entre le siège (22) et l'insert (23) ;
- un orifice d'admission (32) destiné à fournir alimenter le premier collecteur (29) en air de refroidissement qui provient de l'extérieur de la chambre de combustion tubulaire (4) ;
- au moins un conduit de transfert (31) qui relie le premier (29) au second (30) collecteurs.

2. Cadre selon la revendication 1, dans lequel le cadre (21) comprend un orifice d'évacuation (33) destiné à évacuer l'air de refroidissement du second collecteur (30) dans le flux de gaz chaud (15) qui pénètre dans la turbine (4).

3. Cadre selon la revendication 1 ou 2, dans lequel le cadre (21) comprend un orifice de retour (25) qui relie le second collecteur (30) ; l'orifice de retour (25) étant configuré pour créer une boucle fermée pour l'air de refroidissement sans évacuation dans le flux de gaz chaud.

4. Cadre selon l'une quelconque des revendications précédentes, dans lequel l'insert (23) comprend une pièce de maintien (24) en forme de C contenue dans le siège (22) et un joint en nid d'abeilles (25) contenu dans la pièce de maintien (24) et configuré pour être couplé à la turbine (4).

5. Cadre selon la revendication 4, dans lequel le conduit de transfert (31) est réalisé sous la forme d'orifices traversants qui passent à l'intérieur de la pièce de maintien (24).

6. Cadre selon la revendication 4, dans lequel le conduit de transfert (31) est réalisé sous la forme de rainures créées entre la pièce de maintien (24) et le siège (22).

7. Cadre selon la revendication 4, dans lequel le conduit de transfert (31) est réalisé sous la forme d'un espace créé entre la pièce de maintien (24) et le siège (22).

8. Turbine à gaz destinée à des centrales électriques, la turbine à gaz (1) ayant un axe (9) et comprenant :
- un compresseur (2) destiné à comprimer l'air ambiant,
- une chambre de distribution (16) destinée à recevoir l'air comprimé qui quitte le compresseur (2),
- une pluralité de chambres de combustion tubulaires (4) destinées à mélanger et à brûler l'air comprimé qui quitte la chambre de distribution (16) avec au moins un combustible,
- une turbine (3) destinée à dilater le flux de gaz chaud brûlé (15) qui sort des chambres de combustion tubulaires (4) et à effectuer une opération sur un rotor (8) ;
dans lequel chaque chambre de combustion (4) comprend un cadre (21) destiné à relier la chambre de combustion tubulaire (4) à la turbine (3) ; chaque cadre (21) étant réalisé selon l'une quelconque des revendications précédentes et le conduit de transfert étant réalisé soit à l'intérieur de l'insert (23), ou en étant défini par les parties correspondantes du siège (22) et de l'insert (23).
